Europäisches Patentamt

European Patent Office

Office européen des brevets

(19)

(11) Publication number: **0 112 947**
**B1**

(12) **EUROPEAN PATENT SPECIFICATION**

(45) Date of publication of patent specification: **08.10.86**

(51) Int. Cl.⁴: **H 04 B 3/54, H 02 J 13/00**

(21) Application number: **82307004.0**

(22) Date of filing: **30.12.82**

(54) **Data transmission wired system over building.**

(43) Date of publication of application:
**11.07.84 Bulletin 84/28**

(45) Publication of the grant of the patent:
**08.10.86 Bulletin 86/41**

(84) Designated Contracting States:
**DE FR GB IT**

(56) References cited:
**US-A-3 693 155**

**INTERNATIONAL CONFERENCE ON
COMMUNICATIONS, INSTITUTE OF
ELECTRICAL AND ELECTRONICS ENGINEERS,
14th-16th June 1971, pages 39-1 to 39-8,
Montreal, CA., G.L. FULTZ et al.: "Adaptive
routing techniques for store-and-forward
computer-communication networks"**

(73) Proprietor: **SHARP KABUSHIKI KAISHA
22-22 Nagaike-cho Abeno-ku
Osaka 545 (JP)**

(72) Inventor: **Ise, Masahiro
2187-A18-203 Mise-cho
Kashihara-shi Nara-ken (JP)**
Inventor: **Tanaka, Hidehiko
2613-1 Ichinomoto-cho
Tenri-shi Nara-ken (JP)**
Inventor: **Machino, Katsuyuki
1-31-101 Higashikidera-cho
Nara-shi Nara-ken (JP)**
Inventor: **Matsubara, Toshiyuki
2613-1 Ichinomoto-cho
Tenri-shi Nara-ken (JP)**
Inventor: **Terasaka, Teiji
2613-1 Ichinomoto-cho
Tenri-shi Nara-ken (JP)**

(74) Representative: **Wright, Peter David John et al
R.G.C. Jenkins & Co. 12-15, Fetter Lane
London EC4A 1PL (GB)**

Courier Press, Leamington Spa, England.

## Description

This invention relates to data transmission system.

The invention is particularly concerned with a method of transmitting data over power supply wiring from one of a plurality of stations (hereinafter called the "source station") to a selected other one of the stations (hereinafter called the "destination station") wherein the source station transmits a message including data and an address of the destination station and the message is relayed by the stations to the destination station.

In the arrangement shown in U.S. Patent specification No. 3693155, a plurality of message stations are connected to a pyramid of control stations, the message stations forming what can be considered to be the base of the pyramid, and the control stations being used in a network system which converges up the pyramid. When a message is to be transmitted from one message station to another, it is relayed up the converging network by the control stations to a level where it can subsequently be relayed down the network to the intended destination message station. Such an arrangement requires a large number of control stations and a complicated interconnecting network or routing system to ensure that messages are correctly routed.

The method of the present invention is characterised in that the message includes a relay number, and that in order to relay the message a station performs a relay cycle including the steps of determining whether the relay number of the received message equals a predetermined number for that station, and if so terminating the relay cycle, but if not retransmitting the message with the relay number amended to reduce the difference between the relay number and the predetermined number, and then repeating the cycle. Thus, the message is relayed by any station receiving the message provided that that station is not the destination station and that the message has not already been relayed more times than is sufficient.

The system may be used, for example, as part of a gas monitoring system in a building or house. The system may include a plurality of sensors and actuators, which are spread over the building or house, and data developed by the sensors and the actuators may be transmitted around the system and to an alarm. The data is transmitted over the house wiring in order to keep costs down. However, when a fluorescent lamp with a condenser for improving the lamp's power factor, or a high power electric heater is connected to the power line, these lamp and electric heater show low impedance to a data carrier signal. Therefore, the carrier signal level is decreased, hindering the data transmission. By relaying messages, rather than relying on direct transmission from a source station to a destination station, it is more likely that the message can be correctly transmitted.

There follows a description of a specific example of the method according to the present invention, reference being made to the accompanying drawings, in which:

Fig. 1 shows a block diagram of a data transmission/reception section;

Fig. 2 shows an overall data transmission system;

Fig. 3 shows a block diagram of a microcomputer used in the station of Fig. 1;

Fig. 4 shows a data format for the transmitted messages;

Figs. 5(1) to 5(4) show a sequence of relaying data through the system;

Figs. 6(1) to 6(3) are flow charts of operations performed by the stations.

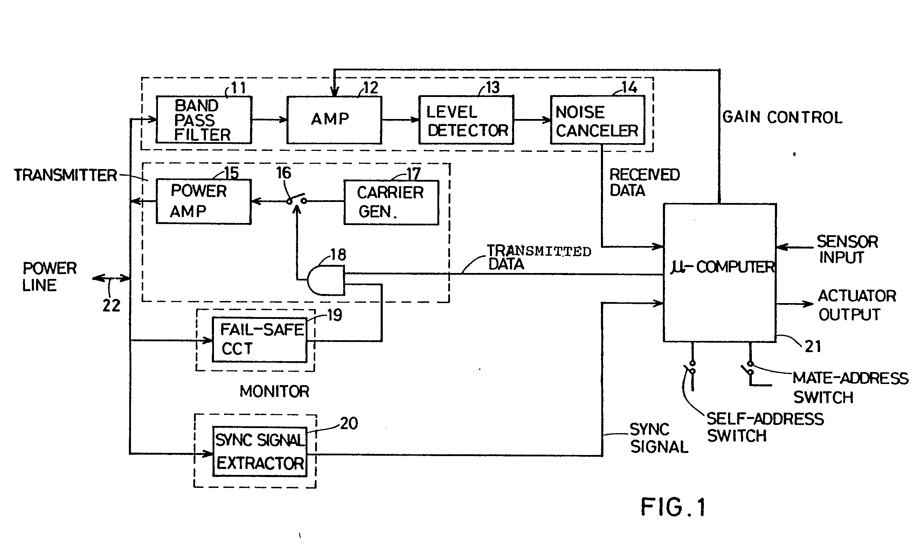

Referring now to Fig. 1, there is illustrated one of a plurality of stations of a signal transmission system in which signals are transmitted between stations over mains house wiring. Each station includes a band pass filter 11, an amplifier 12, a level detector 13, a noise canceller 14, a power amplifier 15, a switch 16, a carrier generator 17, a logic gate 18, a fail-safe circuit 19, a sync signal extractor 20 and a controller 21 which may be provided by a one-chip microcomputer. In the system, the house wiring 22 carries the mains power voltage, typically 60 Hz and 100 volts and also a signal carrier of typically 40 KHz superimposed on the mains power voltage. During reception by a station, the band pass filter 11 of that station extracts the high frequency carrier from the house wiring 22 and the amplifier 12 amplifies the high frequency carrier up to a sufficient level suitable for satisfactory working of the level detector 13. The noise canceller 14 rids the detected signal of any random noise, and its output provides the received data signal. The received signal is fed to the controller 21. The controller 21 is also responsive to an input from a sensor (for example a gas monitoring sensor if the system is used as a gas central monitoring system), and furthermore provides an actuator output signal which may be used to enable an actuator. The fail-safe circuit 19 monitors the housing wiring to see if the controller 21 falls into run-away state.

A carrier is generated by the carrier generator 17 of each station. During normal transmission by a station, transmitted data is fed via the logic gate to control operation of the switch 16. The switch, when closed, connects the output of the carrier generator 17 to the power amplifier 15 the output of which is fed to the house wiring.

The sync extractor 20 converts the sine waveform of the mains voltage into square wave, which is used to synchronise the controller 21.

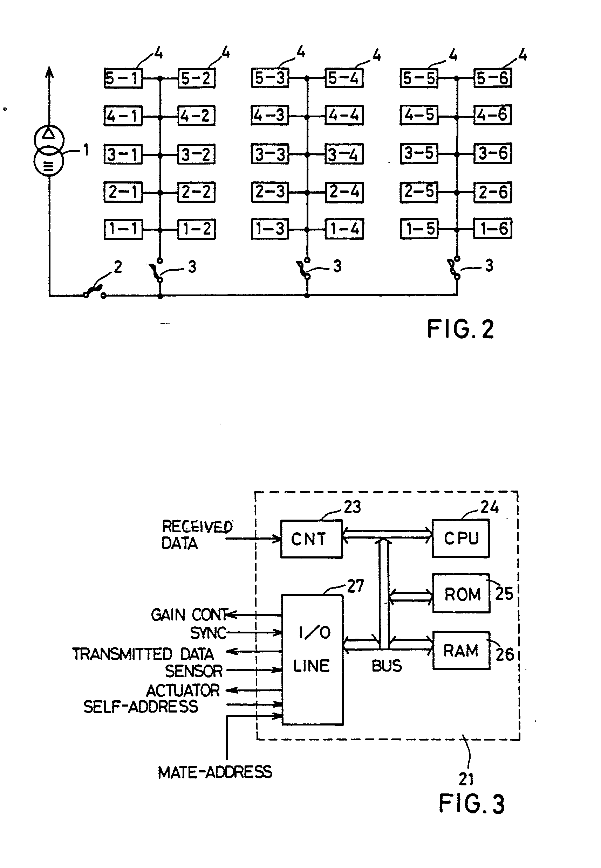

A plurality of stations 4 each as shown in Fig. 1 are disposed at locations 1-1 to 5-6 of a system as shown in Fig. 2.

In the total system of Fig. 2, there is also shown a transformer 1 for stepping down a 3-phase 6600 volt supply to a single phase, 3-line, 100 volt, supply and furthermore, a main circuit breaker 2, and subsidiary circuit breakers 3.

Each station of Fig. 1 can transmit output which can be received by its adjacent stations.

Fig. 3 shows a block diagram of the controller 21. The controller 21 comprises a control circuit CNT 23, a CPU 24, a ROM 25, a RAM 26 and a I/O line circuit 27. The CNT 23 receives an incoming data signal. A self-address switch and a destination or mate address switch are connected to the controller 21. The self-address switch is operated to set a self-address of the station. The mate-address switch is operated to set an address of a selected destination station to which data to be transmitted by the station is destined.

The CPU 24 of Fig. 3 detects a received data signal. The received data is stored in the RAM 26 and can further be re-transmitted thereby to relay the data. The RAM 26 also provides a relay counter. The I/O line circuit 17 inputs and outputs various signals as shown in Fig. 3.

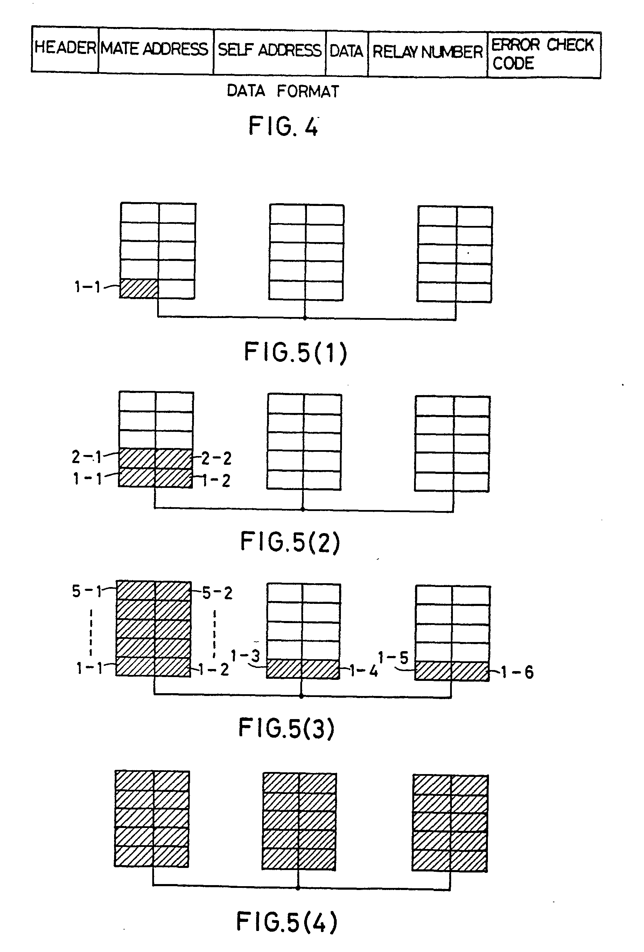

Fig. 4 shows the format of data transmitted from a station. The data format contains fields for a header, the destination (or mate) address, the self-address, the data, a relay number, and error check codes. The header indicates the beginning of a data transmission. The destination address and the self-address are described above. The relay number is subsequently increased each time the data is relayed by the stations. In the present example, the relay number may be a number up to and including 4, which is in practice sufficient to relay the data. The error check code is to enable error checking.

Figs. 5(1) to 5(4) show an example of a sequence of data transmission through the system. In Figs. 5(1) to 5(4), crosshatched stations receive the data.

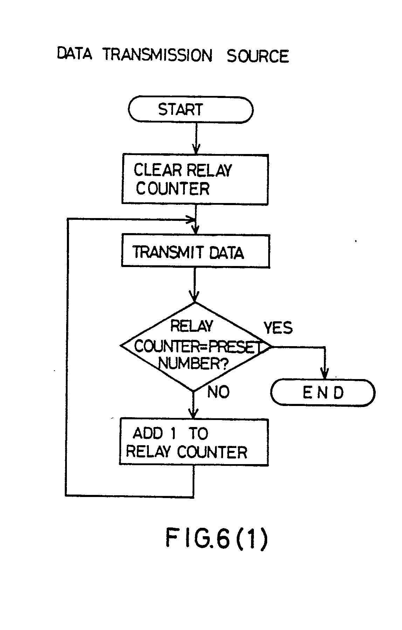

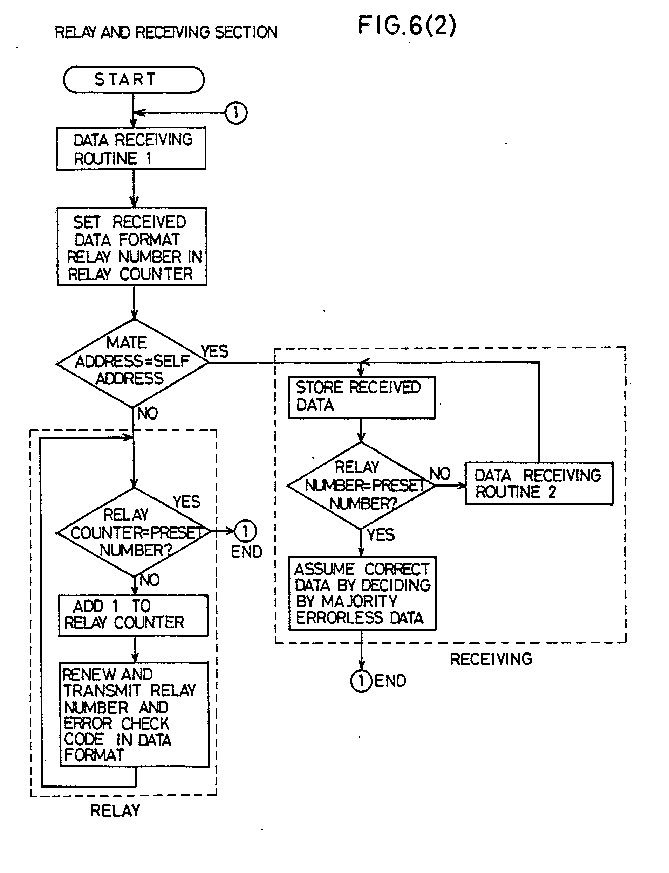

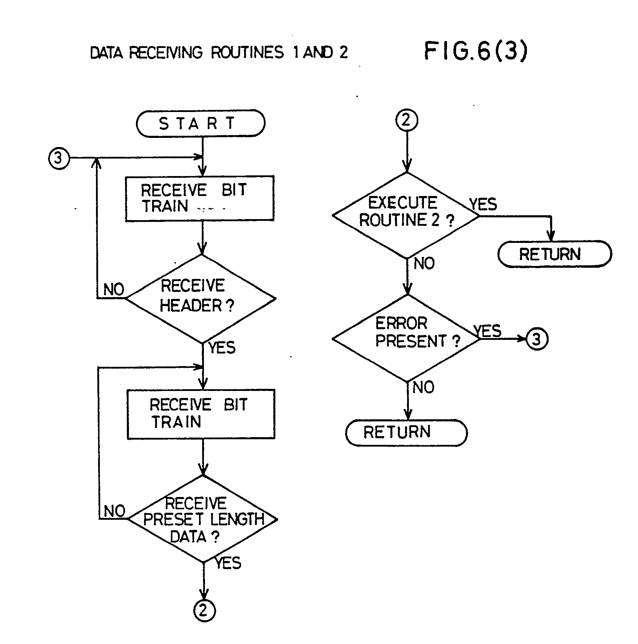

Figs. 6(1) to 6(3) show flow charts of the operation of the system.

Fig. 6(1) shows a flow chart of the operation of a source station which initiates a series of transmissions. The relay counter of this source machine is reset to zero. The data is transmitted repeatedly until the contents of the relay counter equal a predetermined number, the relay counter being increased by one each time the data is transmitted. In the case of a source station, the relay counter represents the number of times the data has been transmitted by that station.

Fig. 6(2) shows a flow chart of the operation of a station when relaying or receiving the data.

A data receiving routine referred to as "Data Receiving Routine 1" is a loop routine performed by a station until a data transmission as shown in Fig. 4 is received without error. A data receiving routine referred to "Data Receiving Routine 2" is similar to "Data Receiving Routine 1" except there is no error check.

First, the data receiving routine 1 is selected. When data is received by a station, the relay counter of that station is set equal to the relay number specified by the received data. It is then detected whether the destination address specified by the received data equals the self-address of the station. When equivalent, a receiving operation for receiving rather than relaying the transmitted data is accomplished as shown in the portion of Figure 6(2) enclosed in dotted lines and marked "receiving". When not equivalent, a relay operation for relaying or retransmitting the received data is accomplished as shown in the portion of Figure 6(2) enclosed in dotted lines and marked "relay".

The receiving operation:

After the receiving data are stored in the RAM 26, it is detected whether the relay number of the received data equals a predetermined number set for the station. When they are not equivalent, the data receiving routine 2 is selected and a further data transmission is awaited. Once a data trans-mission is received having a relay number equal to the predetermined number, the received data is accepted by deciding by majority errorless data. Then, the receiving operation ends.

The relaying operation:

It is detected whether the contents of the relay counter equal the predetermined number set for the station. When they are equivalent, the relaying operation ends. When they are not equivalent, the contents of the relay counter are increased by one. Further, the relay number in the data format as shown in Fig. 4 is also increased by one and the error check code of Fig. 4 is updated. Then, the data is transmitted. The relaying operation is repeated until the number in the relay counter equals the predetermined number set for the station.

Fig. 6(3) shows a flow chart of the receiving routines 1 and 2.

The above description is directed to a time-sharing multiplex system. A frequency-divided multiplex can replace the time-sharing multiplex system.

**Claims**

1. A method of transmitting data over power supply wiring (22) from one of a plurality of stations (4) (hereinafter called the "source station") to a selected other one of the stations (herinafter called the "destination station"), wherein the source station transmits a message including data and an address of the destination station (Figure 4) and the message is relayed by the stations to the destination station, characterised in that the message includes a relay number, and that, in order to relay the message a station performs a relay cycle including the steps of determining whether the relay number of the received message equals a predetermined number for that station, and if so terminating the relay cycle, but if not retransmitting the message with the relay number amended to reduce the difference between the relay number and the predetermined number, and then repeating the cycle (Figure 6(2)).

2. A method as claimed in claim 1, characterised in that the predetermined numbers of the stations are determined so as to be sufficient for a message to be relayed to all of the stations.

3. A method as claimed in claim 1 or claim 2, characterised in that a station receiving a message performs an error check on the data and does not relay the data if an error is detected (Figure 6(3)).

4. A method as claimed in any preceding claim, wherein a source station repeats transmission of a message a predetermined number of times (Figure 6(1)).

## Patentansprüche

1. Verfahren zur Datenübertragung über eine Stromversorgungsleitung (22) von einer von mehreren Stationen (4) (im folgenden Quellenstation genannt) zu einer ausgewählten anderen der Stationen (im folgenden Empfangsstation genannt), bei dem die Quellenstation eine Daten sowie eine Adresse der Empfangsstation enthaltende Nachricht (Fig. 4) aussendet und die Nachricht durch die Stationen zur Empfangstation übertragen wird, dadurch gekennzeichnet, daß die Nachricht eine Übertragungsnummer enthält, und daß zur Übertragung der Nachricht eine Station einen Übertragungszyklus durchführt, bei dem bestimmt wird, ob die Übertragungsnummer der empfangenen Nachricht gleich einer vorbestimmten Nummer für diese Station ist, den Übertragungszyklus beendet, wenn dies der Fall ist, falls dies nicht der Fall ist, die Nachricht mit der Übertragungsnummer weiterleitet, derart verändert, daß die Differenz zwischen der Übertragungsnummer und der vorbestimmten Nummer verringert ist, und daß anschließend der Zyklus wiederholt wird (Fig. 6(2)).

2. Verfahren nach Anspruch 1, dadurch gekennzeichnet, daß die vorbestimmten Nummern der Stationen so festgelegt sind, daß gewährleistet ist, daß eine Nachricht zu allen Stationen übertragen werden kann.

3. Verfahren nach Anspruch 1 oder 2, dadurch gekennzeichnet, daß eine eine Nachricht empfangende Station eine Prüfung der Daten auf Fehler durchführt und die Daten nicht weiter überträgt, wenn sie einen Fehler feststellt (Fig. 6(3)).

4. Verfahren nach einem der vorhergehenden Ansprüche, dadurch gekennzeichnet, daß eine Quellenstation die Aussendung einer Nachricht eine vorbestimmte Anzahl von Malen wiederholt (Fig. 6(1)).

## Revendications

1. Procédé pour transmettre des données, par des fils d'alimentation électrique (22), depuis une station appartenant à un groupe de plusieurs stations (4) (appelée ci-après la "station source") à une autre station choisie dans ce groupe (appelée ci-après la "station de destination"), selon lequel la station source émet un message contenent une donnée et une adresse de la station de destination (Figure 4) et le message est relayé par les stations jusqu'à la station de destination, caractérisé en ce que le message contient un nombre de relais, et en ce qu'en vue de relayer le message, une station exécute un cycle de relayage incluant les étapes consistant à déterminer si le nombre de relais du message reçu est égal à un nombre prédéterminé affecté à cette station, et s'il en est ainsi, à mettre fin au cycle de relayage, mais dans le cas contraire, à retransmettre le message avec le nombre de relais corrigé de manière à réduire la différence entre le nombre de relais et le nombre prédéterminé, puis à répéter le cycle (Figure 6(2)).

2. Procédé selon la revendication 1, caractérisé en ce que les nombres prédéterminés affectés aux stations sont déterminés de manière qu'ils soient suffisants pour qu'un message puisse être relayé à toutes les stations.

3. Procédé selon la revendication 1 ou la revendication 2, caractérisé en ce qu'une station recevant un message exécute sur la donnée un contrôle d'erreur et ne relaie pas la donnée si une erreur est décelée (Figure 6(3)).

4. Procédé selon l'une quelconque des revendications précédentes, selon lequel une station source répète la transmission d'un message un nombre de fois prédéterminé (Figure 6(1)).

FIG. 1

FIG.2

FIG.3

2

| HEADER | MATE ADDRESS | SELF ADDRESS | DATA | RELAY NUMBER | ERROR CHECK CODE |
|--------|--------------|--------------|------|--------------|------------------|

DATA FORMAT

FIG. 4

FIG.5(1)

FIG.5(2)

FIG.5(3)

FIG.5(4)

0 112 947

DATA TRANSMISSION SOURCE

START

CLEAR RELAY
COUNTER

TRANSMIT DATA

RELAY
COUNTER=PRESET
NUMBER?

YES

NO

END

ADD 1 TO
RELAY COUNTER

FIG.6(1)

4

RELAY AND RECEIVING SECTION          FIG.6(2)

START

① 

DATA RECEIVING ROUTINE 1

SET RECEIVED DATA FORMAT RELAY NUMBER IN RELAY COUNTER

MATE ADDRESS=SELF ADDRESS

YES

NO

STORE RECEIVED DATA

RELAY NUMBER=PRESET NUMBER?

NO → DATA RECEIVING ROUTINE 2

YES

ASSUME CORRECT DATA BY DECIDING BY MAJORITY ERRORLESS DATA

RECEIVING

① END

RELAY COUNTER=PRESET NUMBER?

YES → ① END

NO

ADD 1 TO RELAY COUNTER

RENEW AND TRANSMIT RELAY NUMBER AND ERROR CHECK CODE IN DATA FORMAT

RELAY

**0 112 947**

DATA RECEIVING ROUTINES 1 AND 2   FIG.6(3)

6